# EUROPÄISCHE PATENTANMELDUNG

(11) **EP 2 335 905 A1**
(43) Veröffentlichungstag der Anmeldung: **22.06.2011**
(21) Anmeldenummer: 09015607.6
(22) Anmeldetag: 17.12.2009
(51) Int. Cl.: B29C 51/42, B29B 13/02, B29C 51/02

(54) **Verfahren zur Herstellung eines tiefgezogenen Folienteils aus thermoplastischem Kunststoff**

(71) Anmelder: Bayer MaterialScience AG, 51368 Leverkusen (DE)
(72) Erfinder: Wagner, Thomas, 63594 Hasselroth (DE); Herdt, Björn, 51467 Bergisch Gladbach (DE); Muenz, Joerg, 47798 Krefeld (DE); Hedderich, Wilfried, 40724 Hilden (DE)

(57) **Zusammenfassung**

Gegenstand der vorliegenden Erfindung ist ein Verfahren zur Herstellung eines wenigstens teilweise bedruckten, und/oder metallisierten, tiefgezogenen Folienteils, das ein oder mehrere weitere Schichten enthalten kann, mit wenigstens nachstehenden Verfahrensschritten:
es wird ein, ebenes, auf einer oder auf beiden Oberfläche(n) wenigstens teilweise bedrucktes, und/oder metallisiertes und/oder anders beschichtetes Folienstück aus wenigstens einem thermoplastischen Kunststoff bereitgestellt,
- dieses Folienstück wird auf einer Fördereinrichtung angebracht, wobei lediglich randseitige Abschnitte des Folienstücks auf der Fördereinrichtung aufliegen; und die Folie mechanisch oder optisch positioniert wird,
- das so auf der Fördereinrichtung aufliegende Folienstück wird in eine Heizzone eingebracht, und dort wenigstens der Folienabschnitt, der verformt werden soll, auf eine vorgegebene Temperatur erwärmt; und
- das so erwärmte Folienstück wird anschließend in eine Verformungszone eingebracht und dort mit einem fluiden Druckmittel beaufschlagt und isostatisch zu dem gewünschten Tiefziehteil verformt,
dadurch gekennzeichnet, dass ein oder mehrere Folienbereiche des Folienstücks, die vor der Verformung stärker erwärmt wurden, während der Verformung stärker verstreckt werden (Außenbereich) und die Bereiche, die vor der Verformung weniger erwärmt wurden während der Verformung weniger oder gar nicht verstreckt werden (Nutzbereich), wobei der Temperaturunterschied zwischen Nutzbereich und Außenbereich im Allgemeinen 10°C bis 50°C, beträgt.

## Beschreibung

Die vorliegende Erfindung betrifft ein Verfahren zur Herstellung eines wenigstens teilweise bedruckten und/oder metallisierten und/oder sonst wie beschichteten, tiefgezogenen Folienteils aus wenigstens einem thermoplastischen Kunststoff, bevorzugt aus Polycarbonat (PC) oder aus Polymethylmethacrylat bzw. Poly(meth)acrylat (PMMA), wobei bei der Verformung eine inhomogene Temperaturverteilung in der Folie erzeugt wird.

Abhängig von ihrer Anwendung weisen die erfindungsgemäß erhältlichen, (tiefgezogenen Folienteile bzw. Tiefziehteile typischerweise eine, einem vorgegebenen Layout folgende, graphische, funktionale und/oder dekorative Gestaltung mit unterschiedlich gefärbten Abschnitten und gegebenenfalls mit zusätzlich einem oder mehreren transparenten Abschnitt(en) auf. Diese Tiefziehteile können beispielsweise als Leuchtenabdeckungen, als beleuchtete Schilder, als Gehäuseteile, als Druck- oder Schalter-Tasten, als Antennen, als selbstleuchtende, insbesondere elektrolumineszente Flächen, als beheizbare Flächen, als Display-Einrichtungen, als Skalen-, Armaturen- und/oder Instrumenten-Anzeigetafeln, sowie als Zifferblätter und Signalanzeigen verschiedenster Art eingesetzt werden.

Das grundlegende Verfahren zur Umformung einer Platte oder Folie aus Kunststoff zu einem meist relativ einfach geformten Formkörper ist das Thermoformen oder "Thermoforming". Hier wird das ebene Ausgangsmaterial auf eine so hohe Formungstemperatur erwärmt, dass es weich und plastisch wird, und in diesem Zustand unter Einwirkung relativ geringer Formkräfte die Kontur eines Formwerkzeugs angeformt werden kann. Diese Formkräfte können beispielsweise aufgebracht werden durch Anlegung von Vakuum (Vakuumverfahren), durch Beaufschlagung mit einem fluiden Druckmittel unter einem Druckmitteldruck bis zu etwa 4 bis 6 bar (Pressluftverfahren) oder durch eine Kombination beider Maßnahmen. Für PMMA-Folien, hier Plexiglas® XT (von RÖHM GMBH) wird herstellerseitig eine Formungstemperatur von 160 bis 170 °C angegeben. Zum Thermoformen von PC-Folien, hier Makrofol® (von BAYER AG) muss die Folie vorher im Wärmeofen wenigstens 4 h lang bei wenigstens 80 °C getempert werden, um Feuchtigkeit und/oder Lösemittelreste zu entfernen. Anschließend wird die getemperte Folie auf eine Formungstemperatur oberhalb 220 °C erwärmt, beispielsweise mit Hilfe einer Infrarot-Heizung, einer Konvektions-Heizung, einer Hochfrequenz-Heizung oder mit Hilfe einer sonstigen Erwärmungsmaßnahme, wiederum beispielsweise 15 bis 20 sec lang zwischen einer Oberheizung mit einer Strahleroberflächentemperatur von ca. 600 °C und einer Unterheizung mit einer Strahleroberflächentemperatur von ca. 400 °C gehalten. Ohne vorherige Temperbehandlung würden die Feuchtigkeits- und/oder Lösemittelreste bei der Erwärmung auf die Formungstemperatur und beim nachfolgenden Tiefziehen eine Blasenbildung verursachen. Weil beim Thermoformen nur mit relativ geringen Formkräften gearbeitet wird, muss das Material zur Umformung sehr weich und plastisch sein. Typischerweise werden so relativ einfach geformte Formkörper wie Gehäuse und Behälter erhalten. Eine präzise Wiedergabe einer graphischen Gestaltung und/oder eine echte und genaue Abformung scharfkantiger Strukturen der ebenen Ausgangsfolie je am fertigen Formkörper ist nicht möglich.

Ein ähnliches Verfahren ist aus dem Dokument EP 0 371 425 B1 bekannt; dieses Verfahren wird in der Fachwelt auch als "Hochdruckverformung bzw. Hochdruckumformung" von Kunststoff-Folien bzw. als "Höchstdruckverfahren" bzw. als "Kaltverformen von Folien nach dem High Pressure Forming" bzw. als HPF-Verfahren (von High Pressure Forming) bezeichnet. Nach diesem bekannten Verfahren wird beispielsweise eine transparente, eine Schichtdicke von 125 µm aufweisende PC-Folie (Makrofol®, bezogen von BAYER AG) mit einer Erweichungstemperatur von etwa 150 °C auf eine Arbeitstemperatur im Bereich von 90 bis 120 °C erwärmt und daraufhin mit Hilfe von Druckluft von 150 bar umgeformt.

Das Dokument DE 41 13 568 C1 beschreibt eine Vorrichtung zur Hochdruckverformung von Kunststoff-Folien nach diesem HPF-Verfahren. Eine solche automatisch arbeitende Vorrichtung weist wenigstens auf:
- einen endlosen Strang verschieblicher, rahmenartiger Paletten, die von einem Förderer schrittweise durch die verschiedenen Arbeitsstationen der Vorrichtung geführt werden;
- eine Auflegestation, in welcher je ein ebenes, zu verformendes Folienstück in definierter Anordnung auf je einer Palette angeordnet wird;
- eine Heizstation, in welcher jedes Folienstück auf eine vorgegebene Temperatur erwärmt wird;
- eine Formstation mit einem Formwerkzeug, an dessen Formhohlraum das Folienstück angeformt wird;
- eine Entnahmestation, in welcher das in der Formstation verformte, tiefgezogene Folienstück von der, dieses haltenden Palette gelöst wird und in einen Sammelbehälter gelangt; und
- eine Quelle für unter erhöhtem Druck gehaltenes fluides Druckmittel, insbesondere Druckluft, mit welcher das im Formwerkzeug angeordnete Folienstück beaufschlagt und verformt wird.

Eine dort im Einzelnen beschriebene Heizstation weist ein oder mehrere in einer gemeinsamen Ebene ausgerichtete Heizfelder auf, die im Abstand oberhalb und/oder unterhalb der Bewegungsbahn des Palettenstranges angeordnet sind. Jedes Heizfeld weist eine Anzahl Infrarot-Flächenstrahler auf, von denen einige unabhängig regelbar sind.

Während des schrittweisen Vorschubs verbleibt das zu erwärmende Folienstück eine gegebene Zeitspanne lang im Abstand zu diesen Heizfeldern und wird auf die vorgesehene Arbeitstemperatur erwärmt. Mit Hilfe der, eine höhere Temperatur aufweisenden, randständigen Infrarot-Flächenstrahler kann gewährleistet werden, dass auch die Randabschnitte des Folienstücks die gleiche Temperatur, wie der Zentralabschnitt annehmen, so dass das gesamte Folienstück eine einheitliche, bestimmte, vorgegebene Arbeitstemperatur aufweist.

Eine Besonderheit dieser bekannten Hochdruckverformung von Kunststoff-Folien besteht darin, dass die Verformung bei einer Arbeitstemperatur unterhalb der Kunststoff-Erweichungstemperatur des jeweiligen Folienmaterials vorgenommen wird. Beispielsweise hat das dort verwendete Polycarbonat-Material auf der Basis Bisphenol A (Makrolon® von BAYER MaterialScience AG) eine Erweichungstemperatur, von etwa 150° C; und die Hochdruckumformung. wird bei einer Arbeitstemperatur der gesamten erwärmten Folie von etwa 120 °C durchgeführt.

Der automatisierte Folienvorschub zwischen den Arbeitsstationen (Auflegen/Positionieren, Erwärmen, Formen, Stanzen/Entnahme) kann bei den Thermoformanlagen auf verschiedene Arten konstruktiv realisiert werden. So können beispielsweise sogenannte Carriersysteme (Paletten / Rahmen) verwendet werden, welche die Folienbögen positioniert aufnehmen und automatisiert getaktet durch die Fertigungsstrecke befördern, oder es können so genanntes "Rolle- zu Rolle" oder "Rolle zu Bögen" Systeme verwendet werden. Hierbei wird eine endlos bedruckte Folienbahn von Arbeitsstation zu Arbeitsstation getaktet durch die Fertigungsanlage geführt. Die genaue Positionierung in jeder Arbeitsstation erfolgt dabei durch mechanische Mittel (beispielsweise kann ein. Passstift in eine Folienperforation wie beim Filmtransport eingreifen), oder durch optische Mittel (beispielsweise können gedruckte Passkreuze von einer Videokamera erfasst und automatisch ausgerichtet werden).

WO 2009/043539 beschreibt ein Verfahren zur Verformung eines Folienteils, das dadurch gekennzeichnet ist, dass die Erwärmung so vorgenommen wird, dass wenigstens eine Seite des gesamten Folienabschnitts oder des überwiegenden Teils des Folienabschnitts eine Folienoberflächentemperatur im Bereich von 10 bis 65 °C oberhalb der Vicat-Erweichungstemperatur B/50 aufweist. Eine Temperaturdifferenz in der Folie an sich wie bei der vorliegenden Erfindung wird nicht beschrieben, noch wird beschrieben wie diese Temperaturdifferenz erzielt wird.

WO 2009/043539 beschreibt ferner auch, dass ein dunkler bis schwarzer Beschichtungsabschnitt die Wärmeaufnahme verstärkt und ein transparentes Fenster am Folienabschnitt oder ein heller Beschichtungsabschnitt die Wärmeaufnahme vermindert. Es wird versucht, die unterschiedliche Wärmeaufnahme der Folie durch eine gezielte Anpassung der Heizleistung einzelner Heizfelder zu kompensieren, um dadurch die Folientemperatur zu homogenisieren. Dabei ist eine Steuerung und Kontrolle der Arbeitstemperatur erforderlich. WO 2009/043539 offenbart nicht, dass die Wärmeaufnahme der unterschiedlichen Bereiche der Folie gemäß den Methoden a) bis d) der vorliegenden Erfindung gesteuert wird. Vielmehr geht es in diesem Dokument darum, dass eine durch das Druckbild gegebene inhomogene Temperaturverteilung in der Folie gezielt durch Ansteuern der Infarotflächenstrahler kompensiert wird.

Die mittels Hochdruckverformung, tiefgezogenen Folienteile werden häufig noch mit weiterem transparenten Kunststoff hinterspritzt, um formstabile Produkte bereitzustellen. Diese Verfahren werden in der Fachwelt auch als Insert Moulding bezeichnet. Zum Hinterspritzen bzw. Insert Moulding wird das bedruckte und tiefgezogene Folienteil in ein Spritzgusswerkzeug eingelegt und beispielsweise mit einer 0,5 bis 3,0 mm dicken Schicht eines thermoplastischen Kunststoffs hinterspritzt. Zum Hinterspritzen eignen sich thermoplastische Kunststoffe wie etwa Polycarbonat (PC), Mischungen aus PC mit Acrylnitril-Butadien-Styrol-Copolymerisaten (ABS) oder PMMA-Materialien.

Die genannten Verfahren, wie etwa Insert Moulding, Compression Moulding und weitere Verfahren dieser Art, sind allgemein bekannt und liefern mehrschichtige, gegebenenfalls dünnwandige Formkörper, bei denen die Dekorfolie eine Außenschicht bildet, das Dekor selbst sich jedoch innerhalb der Formkörpermasse befindet und damit vor Abrieb geschützt ist. Der Kontakt mit der schmelzflüssigen Kunststoffmasse kann das Dekor an der Dekorschicht beeinträchtigen.

Bei der 3D-Verformung von Folien in thermischen Verformverfahren über einen dreidimensionalen Formkörper (wie HPF-Verformung und Thermotiefziehen), ist es. erforderlich die Verstreckung in wichtigen Folienbereichen zu minimieren, um beispielsweise Risse in metallisierten oder mit den Schichten einer Elektroluminenszenz-Anordnung versehenen Folienbereichen, d.h. Folien mit elektrisch leitfähigen Strukturen, zu vermeiden. Die Funktionalität der elektrischen Leiterbahnen erfüllt somit die hohen Anforderungen an die Rissfreiheit, die Leitfähigkeit und einen geringen Verlustwiderstand im Frequenzbereich von 1Hz - 15GHz. , bevorzugt 100 KHz bis 6,8 GHz , besonders bevorzugt 85 MHz -2,5 GHz. Insbesondere bei 3D-verformten Antennenstrukturen, insbesondere bei Handyschalen mit integrierter Antenne, ist es wichtig rissfreie leitfähige Strukturen en zu erhalten. Die Anforderungen an minimale Versteckung und Präzision der Verformung sind insbesondere bei dieser Anwendung sehr hoch.

Davon ausgehend, besteht die Aufgabe der vorliegenden Erfindung darin, ein Verfahren bereitzustellen, mit dem tiefgezogene und formstabile Folienteile aus wenigstens einem thermoplastischen Kunststoff, in besonders bevorzugten Ausführungsformen aus Polycarbonat (PC) oder aus Polymethylmethacrylat bzw. 'Poly(meth)acrylat (PMMA) erhältlich sind, die nach der Hochdruckumformung oder Thermoverformung eine unveränderte (reproduzierbare), extrem genaue Positionierung der ursprünglichen grafischen, funktionalen und/oder dekorativen Gestaltung in einer Größenordnung von vorzugsweise ±0,1 mm aufweisen.

Eine ebene Folie, die auf der einen Oberfläche mit der vorstehend erläuterten, mehrschichtigen grafischen, funktionalen und/oder dekorativen Gestaltung versehen ist, und die auf der anderen Oberfläche eine Schicht aus farblosem Strukturlack aufweisen kann, wird mit Hilfe des erfindungsgemäßen Verfahrens zu einem dauerhaft dreidimensional verformten und formstabilen Tiefziehteil umgeformt. Hierbei verlangen die Abnehmer solcher Tiefziehteile eine extrem genaue Positionierung der grafischen, funktionalen und/oder dekorativen Gestaltung am fertigen Tiefziehteil. Die Abweichungen zwischen dieser Gestaltung an der ursprünglich ebenen Folie und der entsprechenden Gestaltung am fertigen Tiefziehteil betragen vorzugsweise nicht mehr als ± 0,1 mm.

Eine weitere Aufgabe der Erfindung besteht darin, ein Verfahren zur Verfügung zu stellen, dass eine verstreckungsarme und möglichst rissfreie Verformung definierter Bereichen des Produktes ermöglicht. Eine weitere Aufgabe der Erfindung besteht darin, ein Verfahren zur Verfügung zu stellen, bei dem die Folienbereiche, die die mit elektrisch leitfähigen Strukturen versehenen Bereiche umfassen oder die nach vollständiger Verformung und Konfektionierung das Produkt darstellen, bei der Verformung von Druck zu entlasten.

Der Vorteil des erfmdungsgemäßen Verfahrens besteht darin, das die Verstreckung (Materialdehnung) in Teilbereichen der verformten Folie gezielt und drastisch reduziert werden kann, so dass aufgedruckte funktionelle Schichten, beispielsweise Leitschichten- und/oder die Schichten einer Elektroluminenszenz-Anordnung, in diesem Bereichen nicht mehr reißen und viel genauer positioniert werden können. Damit wird die Designfreiheit des Formverfahrens deutlich erweitert bzw. technische Anwendungen wie Leiterbahnen auf 3D-Formkörpern erst möglich. Unter Folien im Sinne der vorliegenden Erfindung werden insbesondere funktionale Folien verstanden, Der Begriff funktionale Folien umfasst unter anderem EL-Anordnungen und Leitschichten bzw. Leiterbahnen, Bei den erfindungsgemäß zu verformenden Folienstücken aus wenigstens einem thermoplastischen Kunststoff kann es sich auch um eine mehrschichtige Koextrusionsfolie aus wenigstens zwei unterschiedlichen thermoplastischen Kunststoffen handeln. Die Aufgabe wurde dadurch gelöst, dass vor der Verformung eine inhomogene Temperaturverteilung in der Folie erzeugt wird. Auf diese Weise werden die kalten, mechanisch steiferen Folienzonen geringfügig verstreckt, und die wärmeren, weichen Folienzonen deutlich stärker verstreckt. Der Temperaturunterschied zwischen der wärmeren und der kälteren Folienzone soll dabei 10°C bis 50°C, vorzugsweise 10°C bis 30°C, insbesondere 12°C bis 30°C betragen.

Die Verstreckung sollte im Nutzbereich geringer als 40%, bevorzugt geringer 20%, besonders bevorzugt geringer 10% sein.

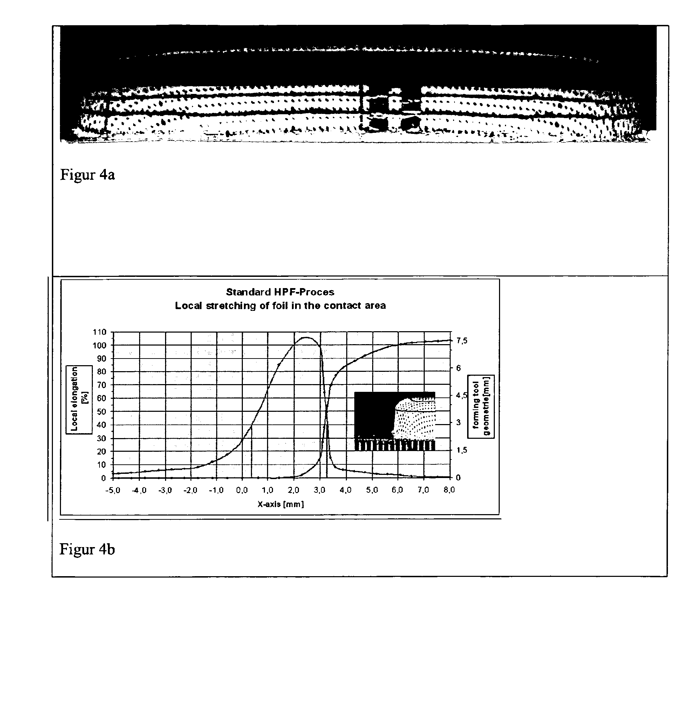

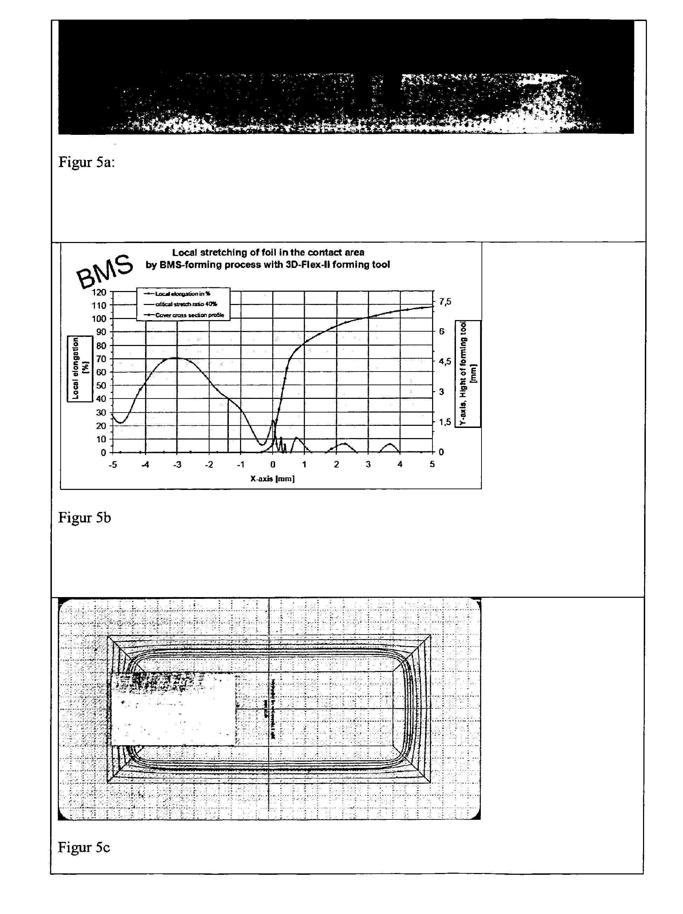

Durch dieses Verfahren kann die lokale Verstreckung in dem Produktbereich an einem Formteil von maximal 100% auf weniger als 20%, bevorzugt weniger als 15% reduziert werden, bezogen auf die Länge der unverstreckten Folie (siehe Figur 4b und Figur 5b). Die Verstreckung wird ermittelt mittels eines fotografischen Verfahrens mit Maßstabskalibrierung und anschließender CAD-Auswertung.

Gegenstand der vorliegenden Erfindung ist daher ein Verfahren zur Herstellung eines wenigstens teilweise bedruckten, und/oder metallisierten, tiefgezogenen Folienteils, das ein oder mehrere weitere Schichten enthalten kann, mit wenigstens nachstehenden Verfahrensschritten:
- es wird ein, ebenes, auf einer oder auf beiden Oberfläche(n) wenigstens teilweise bedrucktes, und/oder metallisiertes und/oder sonst wie beschichtetes Folienstück aus wenigstens einem thermoplastischen Kunststoff bereitgestellt, das mit einer weiteren Druckschicht oder aufkaschierten Folienschicht versehen werden kann,
- dieses Folienstück wird (beispielsweise per Rahmen oder Rolle-zu-Rolle) auf einer Fördereinrichtung angebracht, wobei lediglich randseitige Abschnitte des Folienstücks auf der Fördereinrichtung aufliegen; und die Folie mechanisch oder optisch positioniert wird
- das so auf der Förderinrichtung aufliegende Folienstück wird in eine Heizzone eingebracht, und dort wenigstens der Folienabschnitt, der verformt werden soll, auf eine vorgegebene Temperatur erwärmt; und
- das so erwärmte Folienstück wird anschließend in eine Verformungszone eingebracht und dort mit einem fluiden Druckmittel beaufschlagt und isostatisch zu dem gewünschten Tiefziehteil verformt,
dadurch gekennzeichnet, dass ein oder mehrere Folienbereiche des Folienstücks, die vor der Verformung stärker erwärmt wurden, während der Verformung stärker verstreckt werden (Außenbereich) und die Bereiche, die vor der Verformung weniger erwärmt wurden während der Verformung weniger oder gar nicht verstreckt werden (Nutzbereich), wobei der Temperaturunterschied zwischen Nutzbereich und Außenbereich im Allgemeinen 10°C bis 50°C, besonders bevorzugt 10°C-30°C, insbesondere 12°C bis 30°C beträgt.

Das fluide Druckmittel wird unmittelbar und direkt, beaufschlagt; die Verfahrensweise ist dem Fachmann allgemein bekannt.

Weil sich die Festigkeit der thermoplastischen Folie im Bereich der Erweichungstemperatur (Glastemperatur) sehr stark ändert, werden mit dem oben genannten Verfahren die deutlichsten Effekte erreicht, wenn die kälteren Bereiche der Folie unter der Erweichungstemperatur (Tg) gehalten werden, und die wärmeren Bereiche der Folie über der Erweichungstemperatur (Tg) gehalten werden.

Die Glasübergangs- oder Erweichungstemperatur (Tg) ist die Temperatur, bei der der thermoplastische Kunststoff die größte Änderung der Verformungsfähigkeit aufweist. Dieser so genannte Glasübergang trennt den unterhalb liegenden spröden energieelastischen Bereich (=Glasbereich) vom oberhalb liegenden weichen entropieelastischen Bereich (=gummielastischer Bereich). Sie lässt sich mittels DSC ermitteln, nach ISO 11357 (10°C/min). Polycarbonat beispielsweise hat eine Tg von ca. 150°C.

Die inhomogene Temperaturverteilung in der Folie kann beim Aufheizen der Folie auf verschiedene Weise erzielt werden:
a) durch Farbschichten mit besonders hohem oder niedrigen Emissionsgrad für Wärmestrahlung, die vor der Verformung in Teilbereichen auf die Folie aufgedruckt werden, wobei das Aufdrucken der Farbschichten nach allgemein bekannten Verfahren erfolgt, z.B. nach dem Siebdruckverfahren oder Physical Vapor Deposition (PVD) oder Chemical Vapor Deposition (CVD) oder mit Hilfe einer geeigneten Kombination dieser Verfahren aufgebracht werden. Geeignete Farbstoffe sind unten beschrieben.
   Der Emmisionsgrad ε_{20°C}, für Stoffe mit hoher Reflexion von Wärmestrahlung (= niedriges ε) ist 0 bis 0,33, bevorzugt 0,01 bis 0,20 , besonders bevorzugt 0,02 bis 0,10. Der Emmisionsgrad ε_{20°c}, für Stoffe mit hoher Absorbtion von Wärmestrahlung (hohes ε) ist 0,66 bis 1,0, bevorzugt 0,80 bis 0,95 , besonders bevorzugt von 0,85 bis 0,90.
b) durch Farbschichten mit besonders hohem oder niedrigen Emissionsgrad für Wärmestrahlung, die vor der Verformung in Teilbereichen auf eine auf die Folie aufgezogenen Kaschierfolie aufgedruckt werden. Die Kaschierfolie muss so temperaturfest sein, dass sie den Prozesstemperaturen beim Druck und der Verformung standhält. Als Kaschierfolie wird z. B. eine sehr dünne PC-Folie verwendet. Das Aufdrucken auf die Kaschierfolie erfolgt im Siebdruck und entspricht dem Stand der Technik. Weitere geeignete Verfahren zum Aufbringen der Kaschierfolie sind Physical Vapor Deposition (PVD) oder Chemical Vapor Deposition (CVD) oder mit Hilfe einer geeigneten Kombination dieser Verfahren. Das Aufkaschieren der Kaschierfolie auf die zu verformende Folie ist allgemein bekannt und kann beispielsweise adhäsiv oder mit Klebern, erfolgen. Beim Abziehen der Kaschierfolie ist darauf zu achten, dass die Kaschierfolie möglichst Rückstandsfrei entfernt werden kann.

Die Kaschierfolie dient dazu, die Wärmeaufnahme in der Folie während des Aufheizens zu beeinflussen.
c) durch eine metallische Folie die in Teilen der unverformten Folie aufgelegt (adhäsiv) oder aufgeklebt wird. Geeignete metallische Folien sind bevorzugt aus Aluminium oder Blech, insbesondere aus Aluminium. Sie haben üblicherweise eine Dicke bis zu 250 µm, vorzugsweise 20 bis 120 µm.
d) durch den Einbau von Blenden (z.B. aus Blech, Aluminium, Edelstahl) die zwischen den Heizfeldern und der Folie angebracht sind, und die die Wärmestrahlung gezielt ablenken und/oder Teilbereiche der Folie von der Wärmestrahlung abschotten, während die Folie aufgeheizt wird. Die Blende sollte aus einem Material bestehen, das mindestens bis 400 °C hitzebeständig ist. Bevorzugt ist die Blende aus Metall, wie Aluminium, Edelstahl, Blech. Der Abstand der Blende zur zu verformenden Folie beträgt im Allgemeinen mindestens 5 mm und maximal 50mm. Der Abstand der Blende zum Heizstrahler ist unkritisch. Die Blende kann z.B: an den Heizstrahlern montiert werden. Die Blende hat üblicherweise eine Dicke von 100µm bis 2 mm.

In den Druckpasten sind folgende Farbstoffe oder Füllstoffe geeignet und bevorzugt:
Farbstoffe oder Füllstoffe mit niedrigem Emissionsgrad(ε) (Absorptiongrad (α) = Emissionsgrad(ε)), also Stoffe mit der Eigenschaft Wärmestrahlung sehr gut zu reflektieren sind z.B: Aluminuim(£₂₀°c= 0,04 bis 0,07), Silber(ε20°c = 0,02).
Farbstoffe / Füllstoffe in Druckpasten mit hohem Emmisionsgrad (ε), also Stoffe mit der Eigenschaft Wärmestrahlung sehr gut zu absorbieren sind z.B.: Nitrolack schwarz(ε_{20°c} = 0,83), Emaillelack weiß(ε_{20°c} = 0,91).
Zum Auftragen dieser Farbschichten dienen typischerweise Farblacke auf der Basis von Polycarbonat oder Polyesterpolyurethan. Hochtemperaturbeständige flexible Druckfarben zum Bedrucken von Kunststoff-Folien, die ausdrücklich den Bedingungen des hier vorgesehenen Höchstdruckverfahrens und gegebenenfalls einem nachfolgenden Insert Moulding standhalten, sind beispielsweise in dem Dokument DE 198 32 570 C2 beschrieben. Das Dokument DE 101 51 281 A1 beschreibt Farblacke, die besonders gut für die Siebbedruckung von PMMA-Folien geeignet sind, und den Bedingungen der Höchstdruck-Umformung sowie möglicherweise einem nachfolgenden Insert Moulding standhalten. Speziell für diese Anwendungen geeignete flüssige Siebdruckverfahren werden beispielsweise handelsüblich von der Fa. PRÖLL KG, 91781 Weißenburg, Deutschland vertrieben

Definition : Der Nutzbereich der Folie ist der Bereich, der nach dem Verformen und Ausstanzen Teil des Endproduktes (im Folgenden auch Produkt genannt) wird. Der Außenbereich der Folie ist der Bereich, der nicht Teil des Endproduktes ist.
Fig. 1 stellt eine unverformte Folie (eine bedruckte Gitternetz-Folie) dar.
Fig. 2 stellt eine verformte Folie dar, die noch nicht ausgestanzt wurde.
Fig. 3 stellt das Produkt (Nutzbereich) nach dem Ausstanzen der Außenbereiche dar.

Das erfindungsgemäße Verfahren bietet gegenüber den Verfahren gemäß Stand der Technik den Vorteil, dass mit diesem Verfahren tiefgezogene Folienteile mit deutlich größeren Verformtiefen ohne Risse in der Folie oder den Druckschichten erreichbar sind, weil die Verstreckung der Folie gezielt in diesen Bereichen der Bedruckung reduziert wurde. Die Abbildungsgenauigkeit lässt sich durch das Verfahren deutlich verbessern, weil in den kritischen Formteilbereichen die Verstreckung gezielt reduziert wird, und dadurch im Extremfall (Verstreckung 0%) eine Abwicklung der Folie auf der Formgeometrie erfolgt.. Dadurch werden die für das Endprodukt unwichtigen oder nicht benutzten Folienbereiche als Folienreservoir verwendet, die durch verstärktes Verstrecken die wichtigen Folien-Produktbereiche, also die, die beispielsweise Leitschichten- und/oder die Schichten einer Elektroluminenszenz-Anordnung umfassen, entlastet.

Typischerweise werden Folienstücke im Dickenbereich von 50 µm bis 2.000 µm, vorzugsweise im Dickenbereich von 90 bis 750 µm, besonders bevorzugt im Dickenbereich von 125 bis 600 µm und ganz besonders bevorzugt im Dickenbereich von 175 bis 375 µmin das erfmdungsgemäße Verfahren eingesetzt.

Bei diesen Folien kann man die Folienoberflächentemperatur näherungsweise mit der Folienmitteltemperatur gleichsetzen.

Das Verfahren kann auch für dickere Folien bis zu 5 mm eingesetzt werden. Bei diesen Folien muss die Temperaturverteilung über die Foliendicke beim Aufheizen berücksichtigt werden. Dies erfordert bei Folienunter- und -oberseite ein gleichmäßiges Beheizen mit geringerem Aufheizgradienten, d.h einer um den Faktor 2 bis 10 langsameren Aufheizrate als bei Folien einer Dicke bis 500 µm. Bei Folien einer Dicke bis 500 µm beträgt die Aufheizrate üblicherweise 5 bis 10°C pro Sekunde, wie dem Fachmann allgemein bekannt ist.

Bei dem thermoplastischen Kunststoff kann es sich bevorzugt um wenigstens einen thermoplastischen Kunststoff ausgewählt aus Polymerisaten von ethylenisch ungesättigten Monomeren und/oder Polykondensaten von bifunktionellen reaktiven Verbindungen und/oder Polyadditionaprodukten von bifunktionellen reaktiven Verbindungen, bevorzugt um wenigstens einen thermoplastischen Kunststoff ausgewählt aus Polymerisaten von ethylenisch ungesättigten Monomeren und/oder Polykondensaten von bifunktionellen reaktiven Verbindungen handeln. Für bestimmte Anwendungen kann es vorteilhaft und demnach bevorzugt sein, einen transparenten thermoplastischen Kunststoff einzusetzen.

Besonders geeignete thermoplastische Kunststoffe sind in WO 2009/043534 beschrieben und sind Polycarbonate oder Copolycarbonate auf Basis von Diphenolen, Poly- oder Copolyacrylate und Poly- oder Copolymethacrylate wie beispielhaft und vorzugsweise Polymethylmethacrylat bzw. Poly(meth)acrylat (PMMA), Poly- oder Copolymere mit Styrol wie beispielhaft und vorzugsweise Polystyrol oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS^{®}, Hoechst), Poly- oder Copolykondensate der Terephthalsäure, wie beispielhaft und vorzugsweise Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT) oder Mischungen aus den vorangehend genannten sowie Polyethersulfone. Polyolefine, wie z.B. Polypropylen, ohne Zusatz anderer vorangehend genannter thermoplastischer Kunststoffe sind allerdings für das erfindungsgemäße Verfahren weniger bevorzugt.

Bevorzugte thermoplastische Kunststoffe sind Polycarbonate oder Copolycarbonate, Poly- oder Copolyacrylate, Poly- oder Copolymethacrylate oder Blends enthaltend wenigstens einen dieser thermoplastischen Kunststoffe. Besonders bevorzugt sind Polycarbonate oder Copolycarbonate, insbesondere mit mittleren Molekulargewichten M_{w} von 500 bis 100 000, bevorzugt von 10 000 bis 80 000, besonders bevorzugt von 15 000 bis 40 000 oder deren Blends mit wenigstens einem Poly- oder Copolykondensat der Terephthalsäure mit mittleren Molekulargewichten M_{w} von 10.000 bis 200.000, bevorzugt von 26.000 bis 120.000 oder Poly- oder Copolyacrylate und Poly- oder Copolymethacrylate mit mittleren Molekulargewichten M_{w} im Bereich von 30 000 bis 300 000, besonders bevorzugt im Bereich von 80 000 bis 250 000.

Bevorzugte Polyalkylenterephthalate sind solche, die allein aus Terephthalsäure und deren reaktionsfähigen Derivaten (z. B. deren Dialkylestern) und Ethylenglykol und/oder Butandiol-1,4 und/oder 1,4-Cyclohexandimethanol-Reste hergestellt worden sind, und Mischungen dieser PolyalkylenterephthalatePolyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

Bevorzugt sind ferner auch Blends von wenigstens einem Polycarbonat oder Copolycarbonat mit wenigstens einem Polyalkylenterephthalat, bevorzugt einem der oben genannten. Das Blend enthält bevorzugt 1 bis 90 Gew.-% , bevorzugt 20 bis 85 Gew.-% Polycarbonat oder Copolycarbonat und 99 bis 10 Gew.-%, bevorzugt 80 bis 15 Gew.-% Polyalkylenterepthathalat.. Blends aus Polycarbonaten mit Pfropfpolymerisaten mit Polybutadien oder Acrylatkautschuken als Pfropfgrundlage (ABS oder ASA Pfropfpolyjmerisate) sind ebenfalls geeignet.

Bevorzugte Polycarbonate enthalten mindestens ein Diphenol ausgewählt aus 4,4'-Dihydroxydiphenyl, 2,2-Bis-(4-hydroxyphenyl)-propan und 1,1-Bis-(4-hydroxyphenyl)-3,3,5-trimethyl-cyclohexan Als Polymethyl(meth)acrylat können sowohl Polymethyl(meth)acrylat (PMMA) als auch schlagzäh modifiziertes PMMA (sz-PMMA), Blends aus PMMA oder aus sz-PMMA eingesetzt werden. Sie sind unter der Marke Plexiglas bei der Röhm GmbH erhältlich. Unter Polymethyl(meth)acrylat werden sowohl Polymere der Methacrylsäure und ihrer Derivate, beispielsweise ihrer Ester, als auch Polymere der Acrylsäure und ihrer Derivate als auch Mischungen aus beiden vorstehenden Komponenten verstanden.

Bevorzugt sind Polymethyl(meth)acrylat-Kunststoffe mit einem Methylmethacrylat-Monomeranteil von mindestens 80 Gew.-%, bevorzugt mindestens 90 Gew.-% und gegebenenfalls 0 Gew.-% bis 20 Gew.-%, bevorzugt 0 Gew.-% bis 10 Gew.-% weiterer vinylisch copolymerisierbarer Monomere wie z. B. C1- bis C8-Alkylestern der Acrylsäure oder der Methacrylsäure, z. B. Methylacrylat, Ethylacrylat, Butylacrylat, Butylmethacrylat, Hexylmethacrylat, Cyclohexylmethacrylat, ferner Styrol und Styrolderivate, wie beispielsweise [alpha]-Methylstyrol oder p-Methylstyrol. Weitere Monomere können sein Acrylsäure, Methacrylsäure, Maleinsäureanhydrid, Hydroxyester der Acrylsäure oder Hydroxyester der Methacrylsäure.

Bei den erfindungsgemäß zu verformenden Folienstücken enthaltend wenigsten eine thermoplastischen Kunststoff kann es sich auch um ein Elektrolumineszens (EL)-Element handeln, mit einen Schichtaufbau umfassend (herkömmlicher Aufbau):
a) ein zumindest teilweise transparentes Substrat, Komponente A, vorzugsweise der thermoplastische Kunststoff,
b) mindestens eine auf das Substrat aufgebrachte EL-Anordnung, Komponente B, enthaltend die folgenden Komponenten:
   ba) eine zumindest teilweise transparente Elektrode, Komponente BA, als Frontelektrode,
   bb) gegebenenfalls eine erste Isolationsschicht, Komponente BB,
   bc) eine Schicht, enthaltend mindestens ein durch ein elektrisches Feld anregbares Leuchtpigment (Elektroluminophor), EL-Schicht oder Pigmentschicht genannt, Komponente BC,
   bd) gegebenenfalls eine weitere Isolationsschicht, Komponente BD,
   be) eine Rückelektrode, Komponente BE,
   bf) eine Leiterbahn oder mehrere Leiterbahnen, Komponente BF, zur elektrischen Kontaktierung von sowohl Komponente BA als auch von Komponente BE, wobei die Leiterbahn oder die Leiterbahnen vor, nach oder zwischen den Elektroden BA und BE aufgebracht werden kann bzw. können, wobei vorzugsweise die Leiterbahn oder die Leiterbahnen in einem Arbeitsschritt aufgebracht werden. Die Leiterbahn oder Leiterbahnen können in Form eines Silberbusses, vorzugsweise hergestellt aus einer Silberpaste und/oder eines Silberlacks, aufgebracht sein. Eventuell kann vor dem Aufbringen des Silberbusses noch eine Graphitschicht aufgebracht werden,
c) einer Schutzschicht, Komponente CA oder einer Folie, Komponente CB.

Die Isolationsschichten BB und BD können unabhängig voneinander undurchsichtig, opak oder transparent sein.

Neben den genannten Schichten (Komponenten A, B und C) kann das erfindungsgemäß vorgesehene EL-Element (herkömmlicher Aufbau) weitere Schichten aufweisen. So kann das Substrat, wenn es selbst elektrisch leitend ist, mit einer zusätzlichen Isolationsschicht (Komponente AA), auf die dann die EL-Anordung aufgebracht wird, versehen sein oder werden. Außerdem kann das EL-Element eine oder mehreren Reflexionsschicht(en) aufweisen.

Bevorzugt wird die Reflexionsschichtschicht, soweit vorhanden, zwischen Komponente BA und Komponente BB bzw. BC, wenn Komponente BB fehlt, angeordnet.

Die Reflexionsschicht umfasst vorzugsweise Glaskügelchen, insbesondere Hohlglaskügelchen. Der Durchmesser der Glaskügelchen kann in weiten Grenzen verändert werden. So können sie eine Größe d₅₀ von im Allgemeinen 5 µm bis 3 mm, vorzugsweise 10 bis 200 µm, besonders bevorzugt 20 bis 100 µm, aufweisen. Die Hohlglaskügelchen sind dabei vorzugsweise in ein Bindemittel eingebettet.

Auf dem Substrat A und/oder zwischen Substrat A und der EL-Anordnung können außerdem ein oder mehrere zumindest teilweise transparente grafisch gestaltete Schichten angeordnet sein.

Alternativ kann das EL-Element auch folgenden Aufbau aufweisen (inverser Schichtaufbau):
a) ein zumindest teilweise transparentes Substrat, Komponente A, vorzugsweise der thermoplastische Kunststoff,
b) mindestens eine auf dem Substrat aufgebrachten EL-Anordnung, Komponente B, enthaltend die folgenden Komponenten:
   be) eine Rückelektrode, Komponente BE, die zumindest teilweise transparent sein kann,
   bb) gegebenenfalls eine erste Isolationsschicht, Komponente BB,
   bc) eine Schicht, enthaltend mindestens ein durch ein elektrisches Feld anregbares Leuchtpigment (Elektroluminophor), EL-Schicht oder Pigmentschicht genannt, Komponente BC,
   bd) gegebenenfalls eine weitere Isolationsschicht, Komponente BD,
   ba) eine zumindest teilweise transparente Elektrode, Komponente BA, als Frontelektrode,
   bf) eine Leiterbahn oder mehrere Leiterbahnen, Komponente BF, zur elektrischen Kontaktierung von sowohl Komponente BA als auch von Komponente BE, wobei die Leiterbahn oder die Leiterbahnen vor, nach oder zwischen den Elektroden BA und BE aufgebracht werden kann bzw. können, wobei vorzugsweise die Leiterbahn oder die Leiterbahnen in einem Arbeitsschritt aufgebracht werden. Die Leiterbahn oder Leiterbahnen können in Form eines Silberbusses, vorzugsweise hergestellt aus einer Silberpaste und/oder eines Silberlacks, aufgebracht sein. Eventuell kann vor dem Aufbringen des Silberbusses noch eine Graphitschicht aufgebracht werden,
c) eine zumindest teilweise transparenten Schutzschicht, Komponente CA und/oder einer Folie, Komponente CB.

Neben den genannten Schichten (Komponenten A, B und C) kann das erfindungsgemäße EL-Element mit inversem Schichtaufbau weitere Schichten aufweisen. So kann das Substrat, wenn es selbst elektrisch leitend ist, mit einer zusätzlichen Isolationsschicht (Komponente AA), auf die dann die Elektroluminenszens-Anordung aufgebracht wird, versehen sein oder werden. Außerdem kann das EL-Element eine oder mehreren Reflexionsschicht(en) aufweisen.

Bevorzugt ist die Reflexionsschichtschicht, soweit vorhanden, zwischen Komponente BA und Komponente BD bzw. BC, wenn Komponente BD fehlt, angeordnet.

Auf der transparenten Schutzschicht C und/oder zwischen der transparenten Schutzschicht C und der EL-Anordnung können außerdem ein oder mehrere zumindest teilweise transparente grafisch gestaltete Schichten angeordnet sein. Insbesondere können die grafisch gestalteten Schichten die Funktion der Schutzschicht übernehmen.

Für den Fachmann ist es offensichtlich, dass die für den herkömmlichen Aufbau genannten besonderen Ausführungsformen und Merkmale, soweit nicht anders bestimmt, für den inversen Schichtaufbau entsprechend gelten.

Die eine oder mehreren Isolationsschicht(en) BB und/oder BD sowohl beim herkömmlichen Aufbau als auch beim inversen Aufbau kann bzw. können insbesondere dann entfallen, wenn die Komponente BC eine Schichtdicke aufweist, die einen Kurzschluss zwischen den beiden Elektroden Komponenten BA und BE verhindert.

Zum Betrieb der erfindungsgemäß hergestellten EL-Anordnung weisen die Elektroden BA und BE elektrische Anschlüsse auf, die an einen Seitenrand des erfmdungsgemäßen Folienelements geführt werden und dort mittels Kontaktierhilfen mit einer Stromquelle kontaktiert werden.

EL-Elemente, die mit dem erfmdungsgemäßen Verfahren verformt werden können sind darüber hinaus bekannt aus DE-A-102009017669, WO-A-2008003621, WO-A-2009027387 oder WO-A-2009053458.

### BEISPIELE

Die nachfolgenden Beispiele und Vergleichsbeispiele dienen zur weiteren Erläuterung der vorliegenden Erfindung ohne diese einzuschränken.

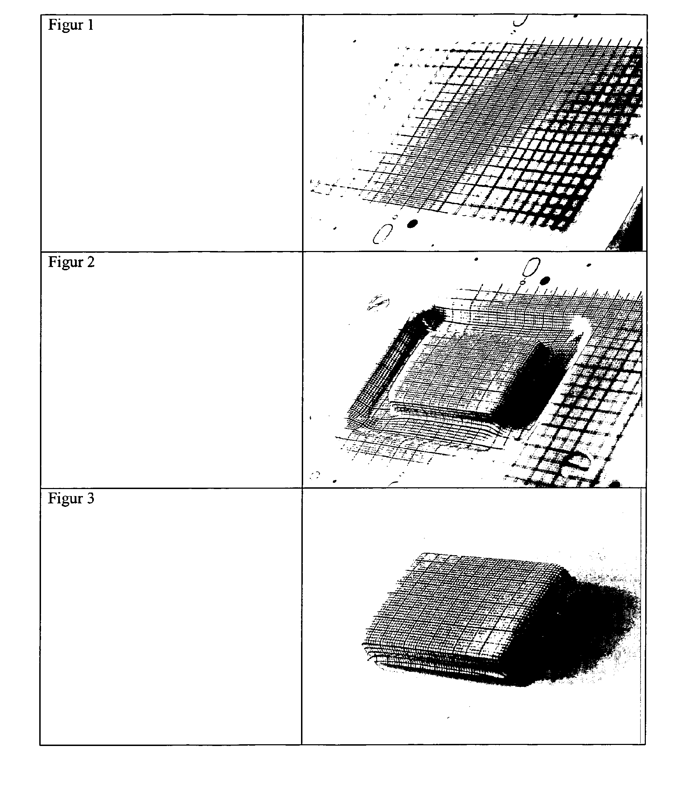

Anhand eines kastenförmigen Verformungswerkzeuges (die Verformungsgeometrie ist in Figur 2 und Figur3 dargestellt) und einer Leiterbahnstruktur, die in dem Verstreckungsbereich aufgedruckt war, konnte nachgewiesen werden, dass die Silberleiterbahn bei der konventionellen HPF-Verformung gemäß WO 2009/043539 mit homogener Heizfeldtemperatur an der Seitenflanke des Formwerkzeuges beim Verformen reißt (siehe Figur 4a und 4b). Durch Ausmessen der zusätzlich aufgedruckten im unverformten Zustand isodistanten Gitternetzstruktur konnte nachgewiesen werden, dass die lokalen Verstreckungswerte über 40 % erreichen. Die Verstreckung wurde ermittelt mittels eines fotografischen Verfahrens mit Maßstabskalibrierung und anschließender CAD-Auswertung.

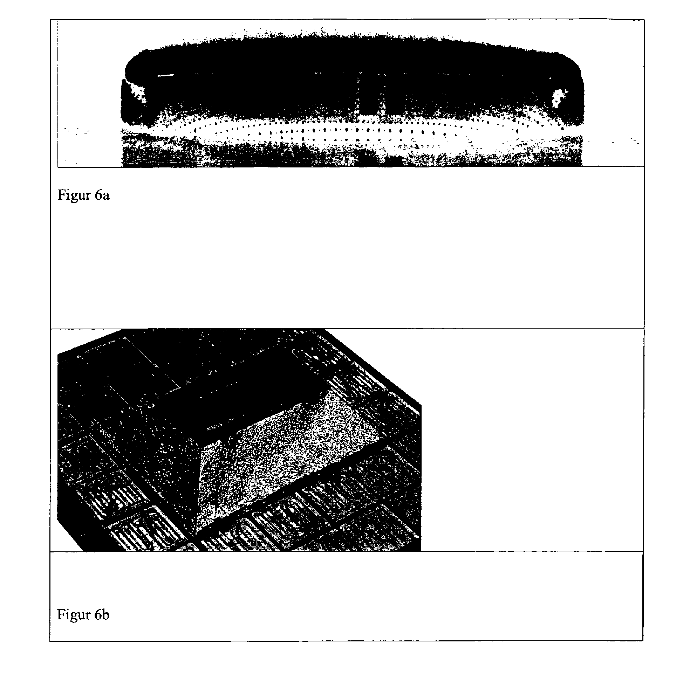

Durch die Verwendung der Verfahren b) und d) konnten Muster reproduzierbar hergestellt werden, deren Versteckung im gesamten Produktbereich weniger als 15% beträgt. Im Bereich des Silberdruckes (Leiterbahnen) sind Werte kleiner 10% gemessen worden. Eine Rissbildung im Silber der Leiterbahnen konnte bei Verwendung der Verfahren b) und d) nicht mehr beobachtet werden. Siehe Figur 5a, b, c und 6a,b

Gemäß Verfahren b) wurde eine Farbschicht (Silberpaste Dupont) verwendet, die auf eine kaschierte PC-Folie (Makrofol DE 1-4 250µ GHX173 AHT) im Siebdruckverfahren aufgedruckt und nach WO 2009/ 043539 verformt.

Gemäß Verfahren d) (Figur 6a und 6b) wurde eine Blende verwendet.

### Vergleich:

Figur 4a zeigt den Nutzbereich nach der Verformung:
   HPF (High Pressure Forming)-Prozess gemäß WO 2009/043539. Die Risse der SilberLeiterbahnen (in der Mitte der Abbildung zu sehen) sind deutlich sichtbar. Die größer werdenden Abstände im Punkte-Gitternetz verdeutlichen die Verstreckung durch die Verformung.
Figur 4b zeigt die lokale Verstreckung im Standard HPF-Prozess: Die gemessene lokale Verstreckung erreicht bis zu 100% Dehnung im Produktbereich. (Messwerte geglättet.

### Erfindungsgemäß:

Figur 5a zeigt den Nutzbereich nach Verformung mit aufgedruckter/aufkaschierter Aluminiumfolie. Im Bereich der Silberleiterbahnen sind keine Risse erkennbar. Die gleichmäßigen Abstände der Punktraster verdeutlichen die sehr geringe Verstreckung über die gesamte Höhe in der Seitenansicht.
Figur 5b zeigt die lokale Verstreckung, die bei der gegebenen Produktgeometrie im Produkt- (bzw. Nutz)bereich maximal 12 % Dehnung aufweist.
Figur 5c zeigt eine bedruckte Folie mit auflaminierter Aluminiumfolie, in dem Bereich, in dem die Folie kälter bleiben soll.
Figur 6a eine gemäß Verfahren d) mit Metallblenden verformte Folie. Die gleichmäßigen Abstände der Punktraster verdeutlichen die sehr geringe Verstreckung von gemessenen <15% über die gesamte Höhe in der Seitenansicht.
Figur 6b zeigt das Heizfeld mit Keramikstrahlern und den Aluminium-Metallblenden. Die Metallblenden werden zur Lenkung der Wärmestrahlung in das obere und/oder untere Heizfeld montiert. Der innerste Bereich deckt den Produktbereich ab. Der darum liegende schmale Ring wird stärker erwärmt und bildet die Versteckungszone ab. Der Außenbereich wird deutlich kälter eingestellt.

## Patentansprüche

1. Verfahren zur Herstellung eines wenigstens teilweise bedruckten und/oder metallisierten, tiefgezogenen Folienteils, das ein oder mehrere weitere Schichten enthalten kann, mit wenigstens nachstehenden Verfahrensschritten:
es wird ein, ebenes, auf einer oder auf beiden Oberfläche(n) wenigstens teilweise bedrucktes, und/oder metallisiertes und/oder anders beschichtetes Folienstück aus wenigstens einem thermoplastischen Kunststoff bereitgestellt,
- dieses Folienstück wird auf einer Fördereinrichtung angebracht, wobei lediglich randseitige Abschnitte des Folienstücks auf der Fördereinrichtung aufliegen; und die Folie mechanisch oder optisch positioniert wird,
- das so auf der Fördereinrichtung aufliegende Folienstück wird in eine Heizzone eingebracht, und dort wenigstens der Folienabschnitt, der verformt werden soll, auf eine vorgegebene Temperatur erwärmt; und
- das so erwärmte Folienstück wird anschließend in eine Verformungszone eingebracht und dort mit einem fluiden Druckmittel beaufschlagt und isostatisch zu dem gewünschten Tiefziehteil verformt,
**dadurch gekennzeichnet, dass** ein oder mehrere Folienbereiche des Folienstücks, die vor der Verformung stärker erwärmt wurden, während der Verformung stärker verstreckt werden (Außenbereich) und die Bereiche, die vor der Verformung weniger erwärmt wurden während der Verformung weniger oder gar nicht verstreckt werden (Nutzbereich), wobei der Temperaturunterschied zwischen Nutzbereich und Außenbereich im Allgemeinen 10°C bis 50°C, beträgt.

2. Verfahren gemäß Anspruch 1, wobei die inhomogene Temperaturverteilung in der Folie beim Aufheizen der Folie wie folgt erzielt wird:
a) durch Farbschichten mit besonders hohem oder niedrigem Emissionsgrad für Wärmestrahlung, die vor der Verformung in Teilbereichen auf die Folie aufgedruckt werden,
b) durch Farbschichten mit besonders hohem oder niedrigem Emissionsgrad für Wärmestrahlung, die vor der Verformung in Teilbereichen auf eine auf die Folie aufgezogenen Kaschierfolie aufgedruckt werden.
c) durch eine metallische Folie, die in Teilen der unverformten Folie aufgelegt oder aufgeklebt wird,
d) durch den Einbau von Blenden, die zwischen den Heizfeldern und der Folie angebracht sind, und die die Wärmestrahlung ablenken und/oder Teilbereiche der Folie von der Wärmestrahlung abschotten, während die Folie aufgeheizt wird.

3. Verfahren gemäß Anspruch 1, wobei die Farbstoffe oder Füllstoffe folgende Emmissionsgrade aufweisen:
hohe Emmisionsgrade: (ε_{20°c}) von 0 bis 0,33,
niedrige Emmissionsgrade (ε_{20°c}) von 0,66 bis 1,0.

4. Verfahren gemäß Anspruch 3, wobei die Emmissionsgrade folgende Werte aufweisen:
hohe Emmisionsgrade: (ε_{20°c}) von 0,01 bis 0,20 ,
niedrige Emmissionsgrade (ε_{20°c}) von 0,80 bis 0,95.
